(19) Europäisches Patentamt
European Patent Office
Office européen des brevets

(11) EP 3 578 329 A1

(12) EUROPEAN PATENT APPLICATION
published in accordance with Art. 153(4) EPC

(43) Date of publication:
11.12.2019 Bulletin 2019/50

(51) Int Cl.:
$B29B\ 11/16\ ^{(2006.01)}$      $B29C\ 70/08\ ^{(2006.01)}$
$B29C\ 70/10\ ^{(2006.01)}$      $B29K\ 101/12\ ^{(2006.01)}$

(21) Application number: 18748379.7

(22) Date of filing: 26.01.2018

(86) International application number:
PCT/JP2018/002402

(87) International publication number:
WO 2018/143068 (09.08.2018 Gazette 2018/32)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD TN

(30) Priority: 02.02.2017 JP 2017017699

(71) Applicant: Toray Industries, Inc.
Tokyo 103-8666 (JP)

(72) Inventors:
• SEIKE, Satoshi
  Nagoya-shi
  Aichi 455-8502 (JP)
• TATEYAMA, Masaru
  Nagoya-shi
  Aichi 455-8502 (JP)
• FUSE, Mitsuki
  Nagoya-shi
  Aichi 455-8502 (JP)

(74) Representative: Hoefer & Partner Patentanwälte
mbB
Pilgersheimer Straße 20
81543 München (DE)

(54) FIBER-REINFORCED RESIN MOLDING MATERIAL

(57) A fiber-reinforced resin forming material comprising fiber-reinforced thermoplastic resin sheet components (I) and (II), wherein: component (I) comprises a resin containing reinforcing fiber bundle (i) having average fiber number n1 of 5,000 pieces or less, average fiber length Lf1 of 10 mm or more and 100 mm or less, and fiber number per unit width of 2,000 pieces/mm or less; component (II) comprises a resin containing reinforcing fiber bundle (ii) having average fiber number n2 of 500 pieces or more, average fiber length Lf2 of 3 mm or more and less than 10 mm, and fiber number per unit width of 2,000 pieces/mm or less; and component (I) and component (II) are laminated to expose component (I) on a surface. Consequently, our invention provides a fiber-reinforced resin forming material having excellent fluidity during the forming and excellent mechanical characteristics such as excellent tensile strength and bending strength.

FIG. 1

**Description**

Technical Field of the Invention

Our invention relates to a fiber-reinforced resin forming material excellent in mechanical characteristics and complicated shape formability.

Background Art of the Invention

Carbon fiber-reinforced plastics (CFRP) excellent in specific strength and specific rigidity have been developed recently for automotive members.

Automotive members of the CFRP made by prepreg, resin transfer molding (RTM) or filament winding (FW) with thermosetting resin are commercially available while such materials had been used as materials of airplanes or sports. On the other hand, the CFRP made with thermoplastic resin attracts attention because of rapid formability and recyclability suitable for mass-produced cars. It is expected that a metal forming process is replaced by a press forming process which has a high productivity and can be formed into a complicated shape or a large shape.

Sheet-like material of discontinuous reinforcing fiber is mainstream for intermediate base material used for the press forming. Patent documents 1 and 2 disclose typical sheet-like materials of sheet molding compound (SMC), glass mat thermoplastic (GMT). Both intermediate materials, which can be used for a so-called flow-stamping forming process in which mold cavities are filled with flowing materials, have a form of longer reinforcing fibers are dispersed in thermoplastic resin while the reinforcing fibers make a shape of chopped strand or swirl. Because it is made of fiber bundles consisting of many single yarns, shaped products tend to have poor mechanical characteristics in spite of excellent fluidity at the time of forming.

Materials excellent in mechanical characteristics are disclosed in Patent documents 3 and 4. Patent document 3 discloses an intermediate material for press forming in which thermoplastic resin components (I) and (II) made with discontinuous reinforcing fibers dispersed like monofilament are laminated alternately. Patent document 4 discloses a reinforcing stampable sheet for press forming in which continuous glass fiber sheet made with thermoplastic matrix resin and short glass fiber sheet are laminated. Both of them are excellent in mechanical characteristics in spite of poor fluidity.

To achieve mechanical characteristics and fluidity at the same time, Patent document 5 discloses a multilayer structure forming material comprising sheets having different fiber lengths or different concentration parameters, so that the bending properties are enhanced by longer fibers constituting the surface layer sheet while the fluidity is enhanced by shorter fibers constituting the inner layer sheet. Thus, the mechanical characteristics and fluidity at the time of forming have been improved in a good balance. However, tensile properties as well as the bending properties are required to be improved.

Prior art documents

Patent documents

Patent document 1: JP2000-141502-A
Patent document 2: JP2003-80519-A
Patent document 3: JP2014-28510-A
Patent document 4: JP-H06-47737-A
Patent document 5: JP-5985085-B

Summary of the Invention

Problems to be solved by the Invention

To meet the above-described requirements, it could be helpful to provide a fiber-reinforced resin forming material excellent in fluidity at the time of forming and mechanical characteristics such as tensile strength and bending strength.

Means for solving the Problems

We invented a fiber-reinforced resin forming material to solve the above-described problems through study. Our invention is configured as follows.

[1] A fiber-reinforced resin forming material comprising fiber-reinforced thermoplastic resin sheet components (I) and (II), wherein: the component (I) comprises a resin containing a reinforcing fiber bundle (i) having an average fiber number n1 of 5,000 pieces or less, an average fiber length Lf1 of 10 mm or more and 100 mm or less, and a fiber number per unit width of 2,000 pieces/mm or less; the component (II) comprises a resin containing a reinforcing fiber bundle (ii) having an average fiber number n2 of 500 pieces or more, an average fiber length Lf2 of 3 mm or more and less than 10 mm, and a fiber number per unit width of 2,000 pieces/mm or less; and the component (I) and the component (II) are laminated to expose the component (I) on a surface.

[2] The fiber-reinforced resin forming material according to [1], wherein the reinforcing fiber bundle (i) has a cutting angle θ of 3° or more and 30° or less.

[3] The fiber-reinforced resin forming material according to [1] or [2], wherein the reinforcing fiber bundle (ii) has a cutting angle θ of 3° or more and 30° or less.

[4] The fiber-reinforced resin forming material according to any one of [1] to [3], wherein a ratio Q (=Lf1/Lf2) of the average fiber length Lf1 of the reinforcing fiber bundle (i) to the average fiber length Lf2 of the reinforcing fiber bundle (ii) is 3 or more and less than 30.

[5] The fiber-reinforced resin forming material according to any one of [1] to [4], wherein a ratio P (=Vf1/Vf2) of the fiber volume content Vf1 of the component (I) to the fiber volume content Vf2 of the component (II) is 1.5 or more.

[6] The fiber-reinforced resin forming material according to any one of [1] to [5], wherein the components (I) and (II) are laminated by a laminate configuration of [(I)/(II)/(I)].

[7] The fiber-reinforced resin forming material according to any one of [1] to [6], wherein the reinforcing fiber bundle (i) has an aspect ratio A1 of 2 or more.

[8] The fiber-reinforced resin forming material according to any one of [1] to [7], wherein the reinforcing fiber bundle (ii) has an aspect ratio A2 of 3 or less.

[9] The fiber-reinforced resin forming material according to any one of [1] to [8], having a thickness of 1 mm or more.

[10] The fiber-reinforced resin forming material according to any one of [1] to [9], wherein a volume ratio of the component (II) to a total volume of components (I) and (II) is 50 to 95 vol%.

[11] The fiber-reinforced resin forming material according to any one of [1] to [10], wherein the reinforcing fiber bundles (i) and (ii) comprise carbon fibers.

[12] The fiber-reinforced resin forming material according to any one of [1] to [11], wherein the resin contains at least one selected from a group of polypropylene resin, polyethylene resin, polycarbonate resin, polyamide resin, polyester resin, polyarylene sulfide resin, polyphenylene sulfide resin, polyether ketone, polyetheretherketone resin, polyether ketone ketone resin, polyether sulfone resin, polyimide resin, polyamide-imide resin, polyetherimide resin and polysulfone resin.

Effect according to the Invention

Our invention makes it possible to provide a fiber-reinforced resin forming material excellent in mechanical characteristics and a complicated shape formability.

Brief explanation of the drawings

[Fig. 1] Fig. 1 is a perspective view showing an example of our fiber-reinforced resin forming material.
[Fig. 2] Fig. 2 is a perspective view showing another example of our fiber-reinforced resin forming material.
[Fig. 3] Fig. 3 is a plan view showing an example of reinforcing fiber bundle constituting our fiber-reinforced resin forming material.
[Fig. 4] Fig. 4 is a plan view showing another example of reinforcing fiber bundle constituting our fiber-reinforced resin forming material.

[Fig. 5] Fig. 5 is a perspective view showing the reinforcing fiber bundle shown in Fig. 3.

Embodiments for carrying out the Invention

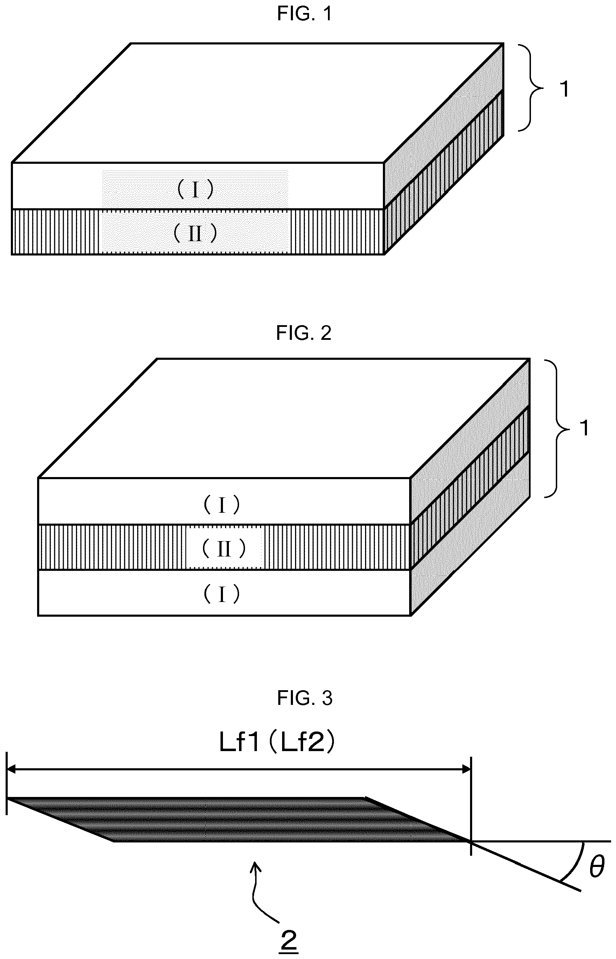

Our fiber-reinforced resin forming material comprises a laminate of component (I) and component (II) as shown in Fig. 1. It is possible that component (I) is integrated with component (II). Component (I) and component (II) comprise a reinforcing fiber and resin.

It is important that a surface layer of the laminate of component (I) and component (II) consists of component (I). It is preferable that an inner layer of the laminate consists of component (II), as shown in Fig. 2 with the laminate configuration of [component (I) / component (II) / component (I)]. The laminate comprises one or more of each component. It is preferable that proportion of components (II) in the total layers of the fiber-reinforced resin forming material is 50% or more. It is more preferably 60% or more and is further preferably 75% or more. It is preferably 95% or less. It is more preferably 90% or less and is further preferably 85% or less. The proportion in such a range can enhance mechanical characteristics and fluidity.

It is preferable that fiber volume content Vf1 of component (I) is 15 vol% or more. It is more preferably 25 vol% or more and is further preferably 35 vol% or more. The content in such a range can enhance mechanical characteristics of the fiber-reinforced resin forming material. It is practical that fiber volume content Vf1 of component (I) is 70 vol% or less.

It is preferable that fiber volume content Vf2 of component (II) is 30 vol% or less. It is more preferably 20 vol% or less and is further preferably 10 vol% or less. The content in such a range can enhance fluidity of the fiber-reinforced resin forming material. It is practical that fiber volume content Vf2 of component (II) is 5 vol% or more.

It is preferable that ratio P (=Vf1/Vf2) of fiber volume content Vf1 of component (I) to fiber volume content Vf2 of component (II) is 1.5 or more. It is more preferably 2 or more and is further preferably 3 or more. The ratio in such a range can enhance mechanical characteristics and fluidity of the fiber-reinforced resin forming material. It is practical that ratio P of fiber volume content Vf1 of component (I) to fiber volume content Vf2 of component (II) is 10 or less.

It is preferable that the fiber-reinforced resin forming material has a thickness of 1 mm or more. It is more preferably 1.5 mm or more and is further preferably 2 mm or more. The thickness in such a range can enhance mechanical characteristics and fluidity of the fiber-reinforced resin forming material. It is practical that the fiber-reinforced resin forming material has a thickness of 10 mm or less.

It is preferable that reinforcing fiber bundles constituting component (I) and component (II) are dispersed randomly. To be dispersed randomly, it is preferable that the forming material has a ratio of the maximum to the minimum of bending elastic modulus is 2 or less. It is more preferably 1.5 or less and is further preferably 1.2 or less. With such randomly-dispersed reinforcing fiber bundles, the fiber-reinforced resin forming material can be designed, laminated and stored, freely without concern of orientation. The bending elastic modulus can be calculated as described later.

It is preferable that reinforcing fiber bundles (i) contained in component (I) have average fiber number n1 of 5,000 pieces or less. It is more preferably 1,000 pieces or less and is further preferably 500 pieces or less. Such a range of fiber number can enhance mechanical characteristics of the fiber reinforced resin forming material. It is practical that reinforcing fiber bundles (i) have average fiber number n1 of 10 pieces or more. The average fiber number can be calculated as described later. It is preferable that reinforcing fiber bundles (ii) contained in component (II) have average fiber number n2 of 500 pieces or more. It is more preferably 1,000 pieces or more and is further preferably 5,000 pieces or more. Such a range of fiber number can enhance fluidity of the fiber reinforced resin forming material. It is practical that reinforcing fiber bundles (ii) have average fiber number n2 of 50,000 pieces or less. It is preferable that the fiber bundle is preliminarily bundled. The fiber bundle may be preliminarily bundled by interlacing single yarns constituting the fiber bundle, by adding sizing agent to the fiber bundle or by twisting yarns in a fiber bundle production process.

It is preferable that reinforcing fiber bundles (i) and (ii) have an average fiber number per unit width of 2,000 pieces/mm or less. It is more preferably 1,500 pieces/mm or less and is further preferably 1,000 pieces/mm or less. Such a range of fiber number can improve resin impregnation into the reinforcing fiber bundle to enhance mechanical characteristics of the fiber-reinforced resin forming material. The average fiber number of more than 2,000 pieces/mm might have poor mechanical characteristics of the forming material. It is practical that the reinforcing fiber bundles have an average fiber number per unit width of 20 pieces/mm or more. The average fiber number per unit width can be calculated by dividing the average fiber number of the reinforcing fiber bundles by the average fiber bundle width. The average fiber bundle width can be calculated as described later.

It is preferable that reinforcing fiber bundles (i) and (ii) have average bundle thickness t of 0.01 mm or more. It is more preferably 0.03 mm or more and is further preferably 0.05 mm or more. The average bundle thickness of less than 0.01 mm might have a poor fluidity of the forming material. It is preferably 0.2 mm or less, and is more preferably 0.18 mm or less and further preferably 0.16 mm or less. The average bundle thickness of more than 0.2 mm might have poor mechanical characteristics of the forming material.

It is preferable that aspect ratio A1 of average fiber length Lf1 to average fiber bundle width D1 of reinforcing fiber bundle (i) contained in component (I) expressed by the formula (A1=Lf1/D1) is 2 or more. It is more preferably 20 or more and is further preferably 100 or more. Such a range of aspect ratio can enhance mechanical characteristics of the fiber-reinforced resin forming material. It is practical that aspect ratio A1 of reinforcing fiber bundle (i) is 200 or less. Average fiber length Lf1 and average fiber bundle width D1 can be calculated as described later.

It is preferable that aspect ratio A2 of average fiber length Lf2 to average fiber bundle width D2 of reinforcing fiber bundle (ii) contained in component (II) expressed by the formula (A2=Lf2/D2) is 3 or less. It is more preferably 2 or less and is further preferably 1 or less. Such a range of aspect ratio can enhance mechanical characteristics of the fiber-reinforced resin forming material. It is practical that aspect ratio A2 of reinforcing fiber bundle (ii) is 0.1 or more. Average fiber length Lf2 and average fiber bundle width D2 can be calculated as described later.

It is preferable that reinforcing fiber bundles (i) contained in component (I) have average fiber length Lf1 of 10 mm or more. It is more preferably 12 mm or more and is further preferably 15 mm or more. It is preferable that reinforcing fiber bundles (i) contained in component (I) have average fiber length Lf1 of 100 mm or less. It is more preferably 75 mm or less and is further preferably 50 mm or less. Such a range of average fiber length can enhance mechanical characteristics of the fiber-reinforced resin forming material.

It is preferable that reinforcing fiber bundles (ii) contained in component (II) have average fiber length Lf2 of 3 mm or more. It is more preferably 4 mm or more and is further preferably 5 mm or more. It is preferable that reinforcing fiber bundles (ii) contained in component (II) have average fiber length Lf2 of less than 10 mm. It is more preferably less than 9 mm and is further preferably less than 8 mm. Such a range of average fiber length can enhance mechanical characteristics and fluidity of the fiber-reinforced resin forming material.

It is preferable that ratio Q (=Lf1/Lf2) of average fiber length Lf1 of component (I) to average fiber length Lf2 of component (II) is 3 or more. It is more preferably 4 or more and is further preferably 5 or more. It is preferable that ratio Q is less than 30. It is more preferably less than 20 and is further preferably less than 10. Such a range of ratio Q can enhance mechanical characteristics and fluidity of the fiber-reinforced resin forming material.

From viewpoints of fluff prevention of reinforcing fibers and improved bundling and adhesiveness to matrix resin of reinforcing fiber strand, it is possible that a sizing agent is added. The sizing agent may be a compound or mixture thereof having a functional group such as epoxy group, urethane group, amino group and carboxyl group although it is not limited in particular. such a compound can be used for another sizing agent added at any timing in a production process of our partially separated fiber bundle described later.

It is preferable that the fiber bundle is preliminarily bundled. The fiber bundle may be preliminarily bundled by interlacing single yarns constituting the fiber bundle, by adding sizing agent to the fiber bundle or by twisting yarns in a fiber bundle production process.

It is preferable that the reinforcing fiber is carbon fiber, glass fiber, aramid fiber or metal fiber although it is not limited in particular. Above all, the carbon fiber is preferable. From a viewpoint of weight saving of fiber-reinforced resin, a carbon fiber such as polyacrylonitrile (PAN)-based carbon fiber, pitch-based carbon fiber and rayon-based carbon fiber or a mixture thereof is preferably used although the carbon fiber is not limited in particular. Above all, it is further preferable to employ the PAN-based carbon fiber from a viewpoint of balance between strength and elastic modulus of the fiber-reinforced resin.

It is preferable that the reinforcing fiber has a single yarn diameter of 0.5 $\mu$m or more. It is more preferably 2 $\mu$m or more and is further preferably 4 $\mu$m or more. It is preferable that the reinforcing fiber has a single yarn diameter of 20 $\mu$m or less. It is more preferably 15 $\mu$m or less and is further preferably 10 $\mu$m or less. It is preferable that the reinforcing fiber has a strand strength of 3.0 GPa or more. It is more preferably 4.0 GPa or more and is further preferably 4.5 GPa or more. It is preferable that the reinforcing fiber has a strand elastic modulus of 200 GPa or more. It is more preferably 220 GPa or more and is further preferably 240 GPa or more. Such a range of the strength and elastic modulus of the reinforcing fiber strand can enhance mechanical characteristics of the fiber-reinforced resin forming material.

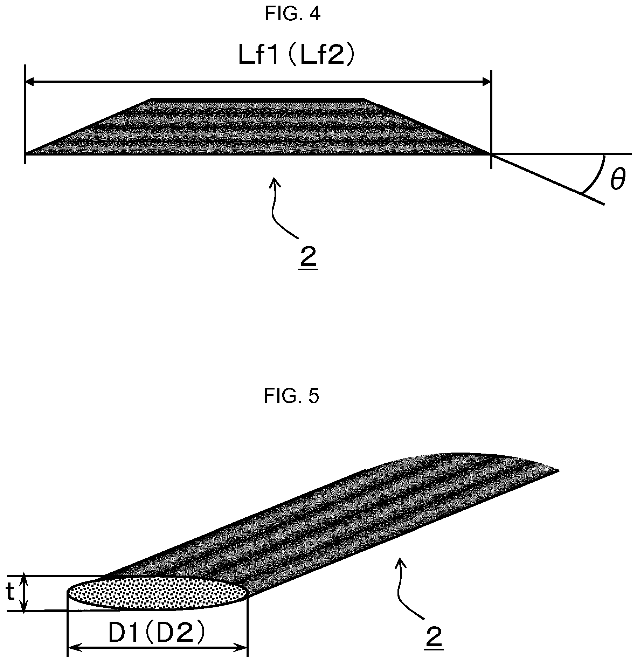

It is preferable that the reinforcing fiber bundle constituting a random mat shown in Fig. 3 or 4 has cutting angle θ of 3° or more. It is more preferably 4° or more and is further preferably 5° or more. Such a range of cutting angle can stably cut fiber bundles. It is preferably 30° or less. It is more preferably 25° or less and is further preferably 15° or less. Such a range of cutting angle can achieve a good fluidity at the time of forming and excellent mechanical characteristics of the shaped product. Besides, θ should be expressed in absolute value.

It is preferable that the thermosetting resin is epoxy resin, vinyl ester resin, phenolic resin, thermosetting polyimide resin, polyurethane resin, urea resin, melamine resin or bismaleimide resin. It is possible to use a single epoxy resin, or alternatively a copolymer of epoxy resin and another thermosetting resin, a modified or blended resin thereof.

It is preferable that the thermoplastic resin is polypropylene resin, polyethylene resin, polycarbonate resin, polyamide resin, polyester resin, polyarylene sulfide resin, polyphenylene sulfide resin, polyether ketone, polyetheretherketone resin, polyether ketone ketone resin, polyether sulfone resin, polyimide resin, polyamide-imide resin, polyetherimide resin or polysulfone resin. It is possible to use a cyclic oligomer as a precursor of these resins. For the purpose of giving flexibility to resin, an additive may be contained.

[Examples]

Hereinafter, details of our invention will be explained with reference to figures. Measurement methods, calculation methods and estimation methods are explained as follow.

<Measurement of average fiber lengths Lf1 and Lf2>

A fiber-reinforced resin forming material is heated for an hour in an electric furnace under nitrogen atmosphere (oxygen level of 1% or less) heated to 500°C to burn out organic substances such as matrix resin, and then the fiber mat is taken out. Forty fiber bundles are picked up from the obtained fiber mat to average the longest fiber lengths in the longitudinal direction of each fiber bundle.

<Measurement of average fiber numbers (n1 and n2) per bundle of fiber-reinforced resin forming material>

A fiber-reinforced resin forming material is heated for an hour in an electric furnace under nitrogen atmosphere (oxygen level of 1% or less) heated to 500°C to burn out organic substances such as matrix resin, and then the fiber mat is taken out. Forty fiber bundles are picked up from the obtained fiber mat to measure weight Wf [mg] of each fiber bundle to determine the average fiber number per bundle.

$$\text{Fiber number per bundle} = Wf/(\rho f \times \pi r^2 \times Lf) \times 10^6$$

$\rho f$: reinforcing fiber density [g/cm$^3$]
r: fiber diameter [$\mu$m]
Lf: average fiber length [mm]

<Measurement of average fiber bundle thickness t>

A fiber-reinforced resin forming material is heated for an hour in an electric furnace under nitrogen atmosphere (oxygen level of 1% or less) heated to 500°C to burn out organic substances such as matrix resin, and then the fiber mat is taken out. Forty fiber bundles are picked up from the obtained fiber mat to average the thickest fiber thicknesses in a direction orthogonal to the bundle width shown in Fig. 5.

<Measurement of average fiber bundle widths D1 and D2>

A fiber-reinforced resin forming material is heated for an hour in an electric furnace under nitrogen atmosphere (oxygen level of 1% or less) heated to 500°C to burn out organic substances such as matrix resin, and then the fiber mat is taken out. Forty fiber bundles are picked up from the obtained fiber mat to average the widest fiber widths in a direction orthogonal to the bundle width shown in Fig. 5.

<Measurement of sizing adhesion amount X>

Reinforcing fiber bundles of approximately 2g are taken out to measure weight Wf0. The sample is heated for 20 minutes in an electric furnace under nitrogen atmosphere (oxygen level of 1% or less) heated to 500°C to burn out the sizing agent. Weight Wf1 of residual carbon fiber cooled down to room temperature is measured to calculate sizing adhesion amount X by the following formula.

$$X\ [\%] = ((Wf0-Wf1)/Wf0) \times 100$$

<Measurement of fiber volume contents Vf1 and Vf2 of fiber-reinforced resin forming materials>

Reinforcing fiber bundles of approximately 2g are taken out to measure weight Wc0. The sample is heated for an hour in an electric furnace under nitrogen atmosphere (oxygen level of 1% or less) heated to 500°C to burn out organic substances such as matrix resin. Weight Wc1 of residual carbon fiber cooled down to room temperature is measured to calculate fiber volume contents by the following formula.

$$Vf1, Vf2 \ [vol\%] = (Wc1/\rho f)/\{Wc1/\rho f + (Wc0 - Wc1)/\rho r\} \ x \ 100$$

$\rho f$: reinforcing fiber density [g/cm$^3$]
$\rho r$: matrix resin density [g/cm$^3$]

<Measurement of bending strength>

The bending strength of the fiber-reinforced resin forming material is measured according to JIS K7074 (1988). The bending strength of less than 200 MPa is evaluated as C. That of 200 MPa and more and less than 350 MPa is evaluated as B while that of 350 MPa or more is evaluated as A.

<Measurement of tensile strength>

The tensile strength of the fiber-reinforced resin forming material is measured according to JIS K7164 (2005). The tensile strength of less than 150 MPa is evaluated as C. That of 150 MPa and more and less than 300 MPa is evaluated as B while that of 300 MPa or more is evaluated as A.

<Measurement of fluidity>

Fluidity R of the fiber-reinforced resin forming material is measured according to the following procedure.
Fiber-reinforced resin forming material is cut into sheets of 100mm x 100mm to be stacked so that the thickness is 4mm. The fiber-reinforced resin forming material preheated at a predetermined temperature with an IR heater is pressurized at 20MPa for 30sec while being placed in a pressing machine heated to a predetermined temperature.
Surface area S2 [mm$^2$] of shaped product and surface area S1 [mm$^2$] of fiber-reinforced resin forming material before being pressed are measured to calculate fluidity [%] by the formula of S2/S1 x 100. The fluidity of less than 200% is evaluated as C. That of 200% or more and less than 300% is evaluated as B while that of 300% or more is evaluated as A.

[Raw materials]

- Reinforcing fiber bundle

Continuous carbon fiber bundle ("PX35" (registered trademark) made by ZOLTEK Corporation) having fiber diameter of 7.2$\mu$m, tensile elastic modulus of 240GPa and single yarns of 50,000 is used.

- Sizing agent

Reactive urethane resin emulsion ("SUPERFLEX (registered trademark) R5000" DKS Co., Ltd.) is used.

- Resin sheet 1

A sheet is prepared by using polyamide master batch made of polyamide 6 resin ("Amilan" (registered trademark) CM1001 made by Toray Industries, Inc.).

- Resin sheet 2

A sheet is prepared by using polypropylene master batch consisting of 90 mass% of native polypropylene resin ("Prime Polypro" (registered trademark) J106MG made by Prime Polymer Co., Ltd.) and 10 mass% of acid-modified polypropylene resin ("ADMER" (registered trademark) QE800 made by Mitsui Chemicals, Inc.).

[Production of components]

The fiber bundle is wound off with a winder at constant speed of 10m/min through a vibration widening roll vibrating along the axis direction at 10Hz to be subjected to a widening process, so that a widened fiber bundle having width of 60mm is prepared through a width restriction roll of 60mm width.
The obtained widened fiber bundle is continuously immersed in sizing solution of the sizing agent diluted with pure water to coat the widened fiber bundle with the sizing agent. Then the widened fiber bundle coated with the sizing agent is dried to remove moisture with a hot roller at 150°C and a drying furnace at 200°C. Adhesion amount of sizing agent of such obtained sizing agent-added widened fiber bundle is calculated as 3.2% according to the above-described measurement method. Besides, the sizing adhesion amount is a total adhesion amount including the sizing agent initially added to the fiber bundle. The widened fiber bundle is immersed in the sizing solution while the tension applied to the fiber bundle is being adjusted in case the width of widened fiber bundle is shrunk by surface tension.

For the obtained sizing agent-added widened fiber bundle, a fiber separation means is provided with fiber separation plates made of iron, having a shape of projection of 0.2mm thickness, 3mm width and 20mm height, equally-spaced by 3.5mm interval in parallel with the width direction of reinforcing fiber bundle. The fiber separation means is intermittently stabbed in and taken off the widened fiber bundle to prepare a partially separated fiber bundle.

The fiber separation means is stabbed to the widened fiber bundle running at constant speed of 10m/min for 3 seconds to generate a separated fiber section and is taken off for 0.2 seconds, and then is stabbed thereto again and again.

The obtained partially separated fiber bundle includes separated fiber sections and accumulated interlaced sections, the separated fiber section having a fiber bundle separated in the width direction to contain target average number of fibers, the accumulated interlaced section being formed at an end of at least one separated fiber section. Then the partially separated fiber bundle is continuously inserted into a rotary cutter to chop the fiber bundle into target fiber length so that a discontinuous fiber nonwoven fabric with isotropic fiber orientation is obtained by uniformly dispersing the fiber bundle.

The discontinuous fiber nonwoven fabric is sandwiched vertically by resin sheets to impregnate the nonwoven fabric with resin by a pressing machine to prepare a sheet-like fiber-reinforced resin forming material.

(Reference example 1)

The above-described production process was performed to prepare a component (30% of fiber volume content, 1mm thickness) of fiber-reinforced resin forming material consisting of resin sheet 1 and discontinuous fiber nonwoven fabric having 98 pieces of average fiber number of reinforcing fiber bundle, 511 pieces/mm of average fiber number per unit width, 12mm of fiber length and 30° of cutting angle as shown in Table 1.

(Reference example 2)

The above-described production process was performed to prepare a component (30% of fiber volume content, 1mm thickness) of fiber-reinforced resin forming material consisting of resin sheet 1 and discontinuous fiber nonwoven fabric having 515 pieces of average fiber number of reinforcing fiber bundle, 1,030 pieces/mm of average fiber number per unit width, 12mm of fiber length and 30° of cutting angle as shown in Table 1.

(Reference example 3)

The above-described production process was performed to prepare a component (30% of fiber volume content, 1mm thickness) of fiber-reinforced resin forming material consisting of resin sheet 1 and discontinuous fiber nonwoven fabric having 4,729 pieces of average fiber number of reinforcing fiber bundle, 1,980 pieces/mm of average fiber number per unit width, 12mm of fiber length and 20° of cutting angle as shown in Table 1.

(Reference example 4)

The above-described production process was performed to prepare a component (30% of fiber volume content, 1mm thickness) of fiber-reinforced resin forming material consisting of resin sheet 1 and discontinuous fiber nonwoven fabric having 9,822 pieces of average fiber number of reinforcing fiber bundle, 4,830 pieces/mm of average fiber number per unit width, 12mm of fiber length and 90° of cutting angle as shown in Table 1.

(Reference example 5)

The above-described production process was performed to prepare a component (30% of fiber volume content, 1mm thickness) of fiber-reinforced resin forming material consisting of resin sheet 1 and discontinuous fiber nonwoven fabric having 512 pieces of average fiber number of reinforcing fiber bundle, 1,024 pieces/mm of average fiber number per unit width, 4mm of fiber length and 20° of cutting angle as shown in Table 1.

(Reference example 6)

The above-described production process was performed to prepare a component (20% of fiber volume content, 1mm thickness) of fiber-reinforced resin forming material consisting of resin sheet 1 and discontinuous fiber nonwoven fabric having 534 pieces of average fiber number of reinforcing fiber bundle, 1,068 pieces/mm of average fiber number per unit width, 4mm of fiber length and 20° of cutting angle as shown in Table 1.

(Reference example 7)

The above-described production process was performed to prepare a component (10% of fiber volume content, 1mm thickness) of fiber-reinforced resin forming material consisting of resin sheet 1 and discontinuous fiber nonwoven fabric having 4,778 pieces of average fiber number of reinforcing fiber bundle, 1,980 pieces/mm of average fiber number per unit width, 4mm of fiber length and 10° of cutting angle as shown in Table 1.

(Reference example 8)

The above-described production process was performed to prepare a component (30% of fiber volume content, 1mm thickness) of fiber-reinforced resin forming material consisting of resin sheet 1 and discontinuous fiber nonwoven fabric having 5,022 pieces of average fiber number of reinforcing fiber bundle, 3,877 pieces/mm of average fiber number per unit width, 12mm of fiber length and 10° of cutting angle as shown in Table 1.

(Reference example 9)

The above-described production process was performed to prepare a component (15% of fiber volume content, 1mm thickness) of fiber-reinforced resin forming material consisting of resin sheet 1 and discontinuous fiber nonwoven fabric having 534 pieces of average fiber number of reinforcing fiber bundle, 1,068 pieces/mm of average fiber number per unit width, 12mm of fiber length and 90° of cutting angle as shown in Table 1.

(Reference example 10)

The above-described production process was performed to prepare a component (30% of fiber volume content, 1mm thickness) of fiber-reinforced resin forming material consisting of resin sheet 1 and discontinuous fiber nonwoven fabric having 5,346 pieces of average fiber number of reinforcing fiber bundle, 1,912 pieces/mm of average fiber number per unit width, 4mm of fiber length and 30° of cutting angle as shown in Table 1.

(Reference example 11)

The above-described production process was performed to prepare a component (50% of fiber volume content, 1mm thickness) of fiber-reinforced resin forming material consisting of resin sheet 1 and discontinuous fiber nonwoven fabric having 328 pieces of average fiber number of reinforcing fiber bundle, 656 pieces/mm of average fiber number per unit width, 4mm of fiber length and 30° of cutting angle as shown in Table 1.

(Reference example 12)

The above-described production process was performed to prepare a component (30% of fiber volume content, 1mm thickness) of fiber-reinforced resin forming material consisting of resin sheet 1 and discontinuous fiber nonwoven fabric having 501 pieces of average fiber number of reinforcing fiber bundle, 1,002 pieces/mm of average fiber number per unit width, 7mm of fiber length and 90° of cutting angle as shown in Table 1.

(Reference example 13)

The above-described production process was performed to prepare a component (30% of fiber volume content, 1mm thickness) of fiber-reinforced resin forming material consisting of resin sheet 1 and discontinuous fiber nonwoven fabric having 510 pieces of average fiber number of reinforcing fiber bundle, 1,020 pieces/mm of average fiber number per unit width, 25mm of fiber length and 90° of cutting angle as shown in Table 1.

(Reference example 14)

The above-described production process was performed to prepare a component (30% of fiber volume content, 1mm thickness) of fiber-reinforced resin forming material consisting of resin sheet 1 and discontinuous fiber nonwoven fabric having 497 pieces of average fiber number of reinforcing fiber bundle, 994 pieces/mm of average fiber number per unit width, 100mm of fiber length and 20° of cutting angle as shown in Table 1.

(Reference example 15)

The above-described production process was performed to prepare a component (10% of fiber volume content, 1mm thickness) of fiber-reinforced resin forming material consisting of resin sheet 1 and discontinuous fiber nonwoven fabric having 5,012 pieces of average fiber number of reinforcing fiber bundle, 4,988 pieces/mm of average fiber number per unit width, 1mm of fiber length and 20° of cutting angle as shown in Table 1.

(Reference example 16)

The above-described production process was performed to prepare a component (10% of fiber volume content, 1mm thickness) of fiber-reinforced resin forming material consisting of resin sheet 1 and discontinuous fiber nonwoven fabric having 5,110 pieces of average fiber number of reinforcing fiber bundle, 1,899 pieces/mm of average fiber number per unit width, 9mm of fiber length and 20° of cutting angle as shown in Table 1.

(Reference example 17)

The above-described production process was performed to prepare a component (30% of fiber volume content, 1mm thickness) of fiber-reinforced resin forming material consisting of resin sheet 1 and discontinuous fiber nonwoven fabric having 5,116 pieces of average fiber number of reinforcing fiber bundle, 4,133 pieces/mm of average fiber number per unit width, 30mm of fiber length and 20° of cutting angle as shown in Table 1.

(Reference example 18)

The above-described production process was performed to prepare a component (30% of fiber volume content, 1mm thickness) of fiber-reinforced resin forming material consisting of resin sheet 1 and discontinuous fiber nonwoven fabric having 612 pieces of average fiber number of reinforcing fiber bundle, 1,224 pieces/mm of average fiber number per unit width, 12mm of fiber length and 20° of cutting angle as shown in Table 1.

(Reference example 19)

The above-described production process was performed to prepare a component (10% of fiber volume content, 1mm thickness) of fiber-reinforced resin forming material consisting of resin sheet 1 and discontinuous fiber nonwoven fabric having 4,988 pieces of average fiber number of reinforcing fiber bundle, 1,733 pieces/mm of average fiber number per unit width, 4mm of fiber length and 20° of cutting angle as shown in Table 1.

(Example 1)

Component (I) of Reference example 1 and component (II) of Reference example 7 were laminated to produce a fiber-reinforced resin forming material having laminate configuration of [(I)/(II)3/(I)]. The obtained fiber-reinforced resin forming material preheated at 280°C was shaped to have 5mm of thickness with a pressing machine. Table 2 shows bending characteristics and fluidity of the obtained shaped product.

(Example 2)

Component (I) of Reference example 2 and component (II) of Reference example 6 were laminated to produce a fiber-reinforced resin forming material having laminate configuration of [(I)/(II)3/(I)]. The obtained fiber-reinforced resin forming material preheated at 280°C was shaped to have 5mm of thickness with a pressing machine. Table 2 shows bending characteristics and fluidity of the obtained shaped product.

(Example 3)

Component (I) of Reference example 2 and component (II) of Reference example 10 were laminated to produce a fiber-reinforced resin forming material having laminate configuration of [(I)/(II)3/(I)]. The obtained fiber-reinforced resin forming material preheated at 280°C was shaped to have 5mm of thickness with a pressing machine. Table 2 shows bending characteristics and fluidity of the obtained shaped product.

(Example 4)

Component (I) of Reference example 2 and component (II) of Reference example 16 were laminated to produce a fiber-reinforced resin forming material having laminate configuration of [(I)/(II)5/(I)]. The obtained fiber-reinforced resin forming material preheated at 280°C was shaped to have 7mm of thickness with a pressing machine. Table 2 shows bending characteristics and fluidity of the obtained shaped product.

(Example 5)

Component (I) of Reference example 2 and component (II) of Reference example 7 were laminated to produce a fiber-reinforced resin forming material having laminate configuration of [(I)2/(II)8/(I)2]. The obtained fiber-reinforced resin forming material preheated at 280°C was shaped to have 12mm of thickness with a pressing machine. Table 2 shows bending characteristics and fluidity of the obtained shaped product.

(Example 6)

Component (I) of Reference example 3 and component (II) of Reference example 7 were laminated to produce a fiber-reinforced resin forming material having laminate configuration of [(I)/(II)3/(I)]. The obtained fiber-reinforced resin forming material preheated at 280°C was shaped to have 5mm of thickness with a pressing machine. Table 2 shows bending characteristics and fluidity of the obtained shaped product.

(Example 7)

Component (I) of Reference example 9 and component (II) of Reference example 7 were laminated to produce a fiber-reinforced resin forming material having laminate configuration of [(I)/(II)5/(I)]. The obtained fiber-reinforced resin forming material preheated at 280°C was shaped to have 7mm of thickness with a pressing machine. Table 2 shows bending characteristics and fluidity of the obtained shaped product.

(Example 8)

Component (I) of Reference example 14 and component (II) of Reference example 7 were laminated to produce a fiber-reinforced resin forming material having laminate configuration of [(I)/(II)5/(I)]. The obtained fiber-reinforced resin forming material preheated at 280°C was shaped to have 7mm of thickness with a pressing machine. Table 2 shows bending characteristics and fluidity of the obtained shaped product.

(Example 9)

Component (I) of Reference example 18 and component (II) of Reference example 19 were laminated to produce a fiber-reinforced resin forming material having laminate configuration of [(I)/(II)5/(I)]. The obtained fiber-reinforced resin forming material preheated at 210°C was shaped to have 7mm of thickness with a pressing machine. Table 2 shows bending characteristics and fluidity of the obtained shaped product.

(Example 10)

Component (I) of Reference example 2 and component (II) of Reference example 5 were laminated to produce a fiber-reinforced resin forming material having laminate configuration of [(I)/(II)5/(I)]. The obtained fiber-reinforced resin forming material preheated at 280°C was shaped to have 7mm of thickness with a pressing machine. Table 2 shows bending characteristics and fluidity of the obtained shaped product.

(Comparative example 1)

Component (I) of Reference example 2 and component (II) of Reference example 11 were laminated to produce a fiber-reinforced resin forming material having laminate configuration of [(I)/(II)3/(I)]. The obtained fiber-reinforced resin forming material preheated at 280°C was shaped to have 5mm of thickness with a pressing machine. Table 2 shows bending characteristics and fluidity of the obtained shaped product.

(Comparative example 2)

Component (I) of Reference example 2 was laminated to produce a fiber-reinforced resin forming material having laminate configuration of [(I)2]. The obtained fiber-reinforced resin forming material preheated at 280°C was shaped to have 2mm of thickness with a pressing machine. Table 2 shows bending characteristics and fluidity of the obtained shaped product.

(Comparative example 3)

Component (I) of Reference example 8 and component (II) of Reference example 7 were laminated to produce a fiber-reinforced resin forming material having laminate configuration of [(I)/(II)3/(I)]. The obtained fiber-reinforced resin forming material preheated at 280°C was shaped to have 5mm of thickness with a pressing machine. Table 2 shows bending characteristics and fluidity of the obtained shaped product.

(Comparative example 4)

Component (II) of Reference example 7 was laminated to produce a fiber-reinforced resin forming material having laminate configuration of [(II)2]. The obtained fiber-reinforced resin forming material preheated at 280°C was shaped to have 2mm of thickness with a pressing machine. Table 2 shows bending characteristics and fluidity of the obtained shaped product.

(Comparative example 5)

Component (I) of Reference example 2 and component (II) of Reference example 15 were laminated to produce a fiber-reinforced resin forming material having laminate configuration of [(I)/(II)5/(I)]. The obtained fiber-reinforced resin forming material preheated at 280°C was shaped to have 7mm of thickness with a pressing machine. Table 2 shows bending characteristics and fluidity of the obtained shaped product.

(Comparative example 6)

Component (I) of Reference example 13 and component (II) of Reference example 15 were laminated to produce a fiber-reinforced resin forming material having laminate configuration of [(I)/(II)5/(I)]. The obtained fiber-reinforced resin forming material preheated at 280°C was shaped to have 7mm of thickness with a pressing machine. Table 2 shows bending characteristics and fluidity of the obtained shaped product.

(Comparative example 7)

Component (I) of Reference example 12 and component (II) of Reference example 7 were laminated to produce a fiber-reinforced resin forming material having laminate configuration of [(I)/(II)3/(I)]. The obtained fiber-reinforced resin forming material preheated at 280°C was shaped to have 5mm of thickness with a pressing machine. Table 2 shows bending characteristics and fluidity of the obtained shaped product.

(Comparative example 8)

Component (I) of Reference example 2 and component (II) of Reference example 17 were laminated to produce a fiber-reinforced resin forming material having laminate configuration of [(I)/(II)5/(I)]. The obtained fiber-reinforced resin forming material preheated at 280°C was shaped to have 7mm of thickness with a pressing machine. Table 2 shows bending characteristics and fluidity of the obtained shaped product.

(Comparative example 9)

Component (I) of Reference example 4 and component (II) of Reference example 7 were laminated to produce a fiber-reinforced resin forming material having laminate configuration of [(I)/(II)3/(I)]. The obtained fiber-reinforced resin forming material preheated at 280°C was shaped to have 5mm of thickness with a pressing machine. Table 2 shows bending characteristics and fluidity of the obtained shaped product.

[Table 1]

| Component | Average fiber number per bundle | Fiber volume content | Average fiber number | Average fiber bundle width | Average fiber number per unit width | Cutting angle θ | Aspect ratio | Thickness | Reinforcing fiber | Resin |
|---|---|---|---|---|---|---|---|---|---|---|
| | | % | mm | mm | pieces/mm | ° | | mm | | |
| Reference example 1 | 98 | 30 | 12 | 0.1 | 511 | 30 | 122.4 | 1 | Carbon fiber | Polyamide 6 |
| Reference example 2 | 515 | 30 | 12 | 0.5 | 1030 | 30 | 23.3 | 1 | Carbon fiber | Polyamide 6 |
| Reference example 3 | 4729 | 30 | 12 | 4.7 | 1980 | 20 | 2.5 | 1 | Carbon fiber | Polyamide 6 |
| Reference example 4 | 9822 | 30 | 12 | 9.8 | 4830 | 90 | 1.2 | 1 | Carbon fiber | Polyamide 6 |
| Reference example 5 | 512 | 30 | 4 | 0.5 | 512 | 20 | 7.8 | 1 | Carbon fiber | Polyamide 6 |
| Reference example 6 | 534 | 20 | 4 | 0.5 | 1068 | 20 | 7.5 | 1 | Carbon fiber | Polyamide 6 |
| Reference example 7 | 4778 | 10 | 4 | 4.8 | 1980 | 10 | 0.8 | 1 | Carbon fiber | Polyamide 6 |
| Reference example 8 | 5022 | 10 | 12 | 5.0 | 3877 | 10 | 2.4 | 1 | Carbon fiber | Polyamide 6 |
| Reference example 9 | 534 | 15 | 12 | 0.5 | 1.068 | 90 | 22.5 | 1 | Carbon fiber | Polyamide 6 |
| Reference example 10 | 5346 | 30 | 4 | 5.3 | 5346 | 30 | 0.7 | 1 | Carbon fiber | Polyamide 6 |
| Reference example 11 | 328 | 50 | 4 | 0.3 | 328 | 30 | 12.2 | 1 | Carbon fiber | Polyamide 6 |
| Reference example 12 | 501 | 30 | 7 | 0.5 | 501 | 90 | 14.0 | 1 | Carbon fiber | Polyamide 6 |
| Reference example 13 | 510 | 30 | 25 | 0.5 | 510 | 90 | 49.0 | 1 | Carbon fiber | Polyamide 6 |

EP 3 578 329 A1

13

(continued)

| Component | Average fiber number per bundle | Fiber volume content % | Average fiber number mm | Average fiber bundle width mm | Average fiber number per unit width pieces/mm | Cutting angle θ ° | Aspect ratio | Thickness mm | Reinforcing fiber | Resin |
|---|---|---|---|---|---|---|---|---|---|---|
| Reference example 14 | 497 | 30 | 100 | 0.5 | 497 | 20 | 201.2 | 1 | Carbon fiber | Polyamide 6 |
| Reference example 15 | 5012 | 10 | 1 | 5.0 | 5012 | 20 | 0.2 | 1 | Carbon fiber | Polyamide 6 |
| Reference example 16 | 5110 | 10 | 9 | 5.1 | 5110 | 20 | 1.8 | 1 | Carbon fiber | Polyamide 6 |
| Reference example 17 | 5116 | 30 | 30 | 5.1 | 5116 | 20 | 5.9 | 1 | Carbon fiber | Polyamide 6 |
| Reference example 18 | 612 | 30 | 12 | 0.6 | 612 | 20 | 19.6 | 1 | Carbon fiber | Polypropylene |
| Reference example 19 | 4988 | 10 | 4 | 5.0 | 1733 | 20 | 0.8 | 1 | Carbon fiber | Polypropylene |

| | Component (I) | | | | | | Component (II) | | | | | | Forming material | | | | | | | |
|---|---|---|---|---|---|---|---|---|---|---|---|---|---|---|---|---|---|---|---|---|
| | | Average fiber number per bundle | Average fiber number per unit width pieces/mm | Fiber volume Content Vf1 % | Fiber length Lf1 mm | Aspect ratio A1 | | Average fiber number per bundle | Average fiber number per unit width pieces/mm | Fiber volume Content Vf2 % | Fiber length Lf2 mm | Aspect ratio A2 | Laminate configuration | Proportion of component (II) % | Fiber volume content ratio P (= Vf1/Vf2) | Average fiber length ratio Q (= Lf1/Lf2) | Forming material thickness mm | Bending strength | Tensile strength | Fluidity |
| Example 1 | Reference example 1 | 98 | 511 | 30 | 12 | 122.4 | Reference example 7 | 4778 | 1980 | 10 | 4 | 0.8 | [(I)/(II)3/(I)] | 60 | 3.0 | 3.0 | 5.0 | A | A | A |
| Example 2 | Reference example 2 | 515 | 1030 | 30 | 12 | 23.3 | Reference example 6 | 534 | 1068 | 20 | 4 | 7.5 | [(I)/(II)3/(I)] | 60 | 1.5 | 3.0 | 5.0 | A | A | A |
| Example 3 | Reference example 2 | 515 | 1030 | 30 | 12 | 23.3 | Reference example 10 | 5346 | 1912 | 30 | 4 | 0.7 | [(I)/(II)3/(I)] | 60 | 1.0 | 3.0 | 5.0 | A | A | B |
| Example 4 | Reference example 2 | 515 | 1030 | 30 | 12 | 23.3 | Reference example 16 | 5110 | 1899 | 10 | 9 | 1.8 | [(I)/(II)5/(I)] | 71 | 3.0 | 1.3 | 7.0 | A | A | B |
| Example 5 | Reference example 2 | 515 | 1030 | 30 | 12 | 23.3 | Reference example 7 | 4778 | 1980 | 10 | 4 | 0.8 | [(I)2/(II)8/(I)2] | 67 | 3.0 | 3.0 | 12.0 | A | A | A |
| Example 6 | Reference example 3 | 4729 | 1980 | 30 | 12 | 2.5 | Reference example 7 | 4778 | 1980 | 10 | 4 | 0.8 | [(I)/(II)3/(I)] | 60 | 3.0 | 3.0 | 5.0 | B | B | A |
| Example 7 | Reference example 9 | 534 | 1068 | 30 | 12 | 22.5 | Reference example 7 | 4778 | 1980 | 10 | 4 | 0.8 | [(I)/(II)5/(I)] | 71 | 3.0 | 3.0 | 7.0 | B | B | A |
| Example 8 | Reference example 14 | 497 | 994 | 30 | 100 | 201.2 | Reference example 7 | 4778 | 1980 | 10 | 4 | 0.8 | [(I)/(II)5/(I)] | 71 | 3.0 | 25.0 | 7.0 | A | A | A |
| Example 9 | Reference example 18 | 612 | 1224 | 30 | 12 | 19.6 | Reference example 19 | 4988 | 1733 | 10 | 4 | 0.8 | [(I)/(II)5/(I)] | 71 | 3.0 | 3.0 | 7.0 | A | A | A |
| Example 10 | Reference example 2 | 515 | 1030 | 30 | 12 | 23.3 | Reference example 5 | 512 | 1024 | 30 | 4 | 7.8 | [(I)/(II)5/(I)] | 71 | 1.0 | 3.0 | 7.0 | A | A | B |
| Comparative example 1 | Reference example 2 | 515 | 1030 | 30 | 12 | 23.3 | Reference example 11 | 328 | 656 | 50 | 4 | 12.2 | [(I)/(II)3/(I)] | 60 | 0.6 | 3.0 | 5.0 | A | A | C |
| Comparative example 2 | Reference example 2 | 515 | 1030 | 30 | 12 | 23.3 | | | | | | | [(I)]2 | 0 | | | 2.0 | A | A | C |
| Comparative example 3 | Reference example 8 | 5022 | 3877 | 10 | 12 | 2.4 | Reference example 7 | 4778 | 1980 | 10 | 4 | 0.8 | [(I)/(II)3/(I)] | 60 | 1.0 | 3.0 | 5.0 | C | C | A |
| Comparative example 4 | | | | | | | Reference example 7 | 4778 | 1980 | 10 | 4 | 0.8 | [(II)]2 | 100 | | | 2.0 | C | C | A |
| Comparative example 5 | Reference example 2 | 515 | 1030 | 30 | 12 | 24.0 | Reference example 15 | 5012 | 4988 | 10 | 1 | 0.1 | [(I)/(II)5/(I)] | 71 | 3.0 | 24.0 | 7.0 | B | C | A |
| Comparative example 6 | Reference example 13 | 510 | 1020 | 30 | 25 | 50.0 | Reference example 15 | 5012 | 4988 | 10 | 1 | 0.1 | [(I)/(II)5/(I)] | 71 | 3.0 | 50.0 | 7.0 | B | C | A |
| Comparative example 7 | Reference example 12 | 501 | 1002 | 30 | 7 | 0.5 | Reference example 7 | 4778 | 1980 | 10 | 4 | 0.8 | [(I)/(II)3/(I)] | 60 | 3.0 | 1.8 | 5.0 | C | C | B |
| Comparative example 8 | Reference example 2 | 515 | 1030 | 30 | 12 | 23.3 | Reference example 17 | 5116 | 4133 | 30 | 30 | 5.9 | [(I)/(II)5/(I)] | 71 | 1.0 | 0.4 | 7.0 | A | A | C |
| Comparative example 9 | Reference example 4 | 9822 | 4830 | 30 | 12 | 1.2 | Reference example 7 | 4778 | 1980 | 10 | 4 | 0.8 | [(I)/(II)3/(I)] | 60 | 1.0 | 3.0 | 5.0 | C | B | A |

Industrial Applications of the Invention

Our fiber-reinforced resin forming material can be used suitably for automotive interior and exterior, electric and electronic device housing, bicycle, plane interior material, box for transportation or the like.

Explanation of symbols

1:         fiber-reinforced resin forming material

2:         reinforcing fiber bundle

(I),(II):     component

D1,D2:    average fiber bundle width

Lf1,Lf2:   average fiber length

t:         average fiber bundle thickness

**Claims**

1. A fiber-reinforced resin forming material comprising fiber-reinforced thermoplastic resin sheet components (I) and (II), wherein:

   the component (I) comprises a resin containing a reinforcing fiber bundle (i) having an average fiber number n1 of 5,000 pieces or less, an average fiber length Lf1 of 10 mm or more and 100 mm or less, and a fiber number per unit width of 2,000 pieces/mm or less;
   the component (II) comprises a resin containing a reinforcing fiber bundle (ii) having an average fiber number n2 of 500 pieces or more, an average fiber length Lf2 of 3 mm or more and less than 10 mm, and a fiber number per unit width of 2,000 pieces/mm or less; and
   the component (I) and the component (II) are laminated to expose the component (I) on a surface.

2. The fiber-reinforced resin forming material according to claim 1, wherein the reinforcing fiber bundle (i) has a cutting angle θ of 3° or more and 30° or less.

3. The fiber-reinforced resin forming material according to claim 1 or 2, wherein the reinforcing fiber bundle (ii) has a cutting angle θ of 3° or more and 30° or less.

4. The fiber-reinforced resin forming material according to any one of claims 1 to 3, wherein a ratio Q (=Lf1/Lf2) of the average fiber length Lf1 of the reinforcing fiber bundle (i) to the average fiber length Lf2 of the reinforcing fiber bundle (ii) is 3 or more and less than 30.

5. The fiber-reinforced resin forming material according to any one of claims 1 to 4, wherein a ratio P (=Vf1/Vf2) of the fiber volume content Vf1 of the component (I) to the fiber volume content Vf2 of the component (II) is 1.5 or more.

6. The fiber-reinforced resin forming material according to any one of claims 1 to 5, wherein the components (I) and (II) are laminated by a laminate configuration of [(I)/(II)/(I)].

7. The fiber-reinforced resin forming material according to any one of claims 1 to 6, wherein the reinforcing fiber bundle (i) has an aspect ratio A1 of 2 or more.

8. The fiber-reinforced resin forming material according to any one of claims 1 to 7, wherein the reinforcing fiber bundle (ii) has an aspect ratio A2 of 3 or less.

9. The fiber-reinforced resin forming material according to any one of claims 1 to 8, having a thickness of 1 mm or more.

10. The fiber-reinforced resin forming material according to any one of claims 1 to 9, wherein a volume ratio of the component (II) to a total volume of components (I) and (II) is 50 to 95 vol%.

11. The fiber-reinforced resin forming material according to any one of claims 1 to 10, wherein the reinforcing fiber bundles (i) and (ii) comprise carbon fibers.

12. The fiber-reinforced resin forming material according to any one of claims 1 to 11, wherein the resin contains at least one selected from a group of polypropylene resin, polyethylene resin, polycarbonate resin, polyamide resin, polyester resin, polyarylene sulfide resin, polyphenylene sulfide resin, polyether ketone, polyetheretherketone resin, polyether ketone ketone resin, polyether sulfone resin, polyimide resin, polyamide-imide resin, polyetherimide resin and polysulfone resin.

FIG. 1

FIG. 2

FIG. 3

Lf1（Lf2）

$\theta$

2

FIG. 4

Lf1（Lf2）

2

θ

FIG. 5

t

D1（D2）

2

## INTERNATIONAL SEARCH REPORT

| International application No. |
| --- |
| PCT/JP2018/002402 |

**A. CLASSIFICATION OF SUBJECT MATTER**

Int.Cl. B29B11/16(2006.01)i, B29C70/08(2006.01)i, B29C70/10(2006.01)i, B29K101/12(2006.01)n

According to International Patent Classification (IPC) or to both national classification and IPC

**B. FIELDS SEARCHED**

Minimum documentation searched (classification system followed by classification symbols)

Int.Cl. B29B11/16, 15/08-15/14, C08J5/04-5/10, 5/24, B29C70/00-70/88, B32B1/00-43/00, B29K101/12

Documentation searched other than minimum documentation to the extent that such documents are included in the fields searched

| | |
| --- | --- |
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| A | JP 2017-001264 A (MITSUBISHI PLASTICS IND.) 05 January 2017, whole document, particularly, claims, paragraphs [0025]-[0030], [0068]-[0074], [0088]-[0127] (Family: none) | 1-12 |
| A | WO 2015/115225 A1 (TEIJIN LTD.) 06 August 2015, whole document, particularly, claims, examples & US 2017/0008260 A1, claims, examples | 1-12 |
| A | WO 2015/108021 A1 (TORAY INDUSTRIES) 23 July 2015, whole document, particularly, claims, examples & US 2016/0339669 A1, claims, examples & EP 3095807 A1 & CN 105916918 A & KR 10-2016-0111401 A | 1-12 |

☒ Further documents are listed in the continuation of Box C.     ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 23.03.2018 | 03.04.2018 |

| Name and mailing address of the ISA/ | Authorized officer |
| --- | --- |
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**

| International application No. |
| --- |
| PCT/JP2018/002402 |

C (Continuation). DOCUMENTS CONSIDERED TO BE RELEVANT

| Category* | Citation of document, with indication, where appropriate, of the relevant passages | Relevant to claim No. |
| --- | --- | --- |
| A | JP 5-009301 A (NIPPON STEEL CORPORATION) 19 January 1993, whole document (Family: none) | 1-12 |
| A | JP 2013-176984 A (TORAY INDUSTRIES) 09 September 2013, whole document (Family: none) | 1-12 |
| E, A | JP 2018-035274 A (OJI HOLDINGS CORPORATION) 08 March 2018, whole document, particularly, claims, paragraphs [0013]-[0040], [0088]-[0107], fig. 1, 2 (Family: none) | 1-12 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2000141502 A
- JP 2003080519 A
- JP 2014028510 A
- JP H0647737 A
- JP 5985085 B